(19) Europäisches Patentamt
European Patent Office
Office européen des brevets

(11) **EP 4 082 985 B1**

(12) **EUROPEAN PATENT SPECIFICATION**

(45) Date of publication and mention
of the grant of the patent:
**12.06.2024   Bulletin 2024/24**

(51) International Patent Classification (IPC):
**C04B 28/04** (2006.01)    **C04B 28/06** (2006.01)
**C04B 40/00** (2006.01)    **C04B 103/10** (2006.01)

(21) Application number: **21382373.5**

(22) Date of filing: **28.04.2021**

(52) Cooperative Patent Classification (CPC):
(C-Sets available)
**C04B 28/06; C04B 28/04; C04B 28/065;**
**C04B 40/0039;** C04B 2103/105              (Cont.)

(54) **PROCESS FOR PREPARING XONOTLITE FUNCTIONALIZED WITH AT LEAST ONE POLYALKYLENE GLYCOL, AND FUNCTIONALIZED XONOTLITES, COMPOSITIONS AND USES THEREOF**

VERFAHREN ZUR HERSTELLUNG VON MIT MINDESTENS EINEM POLYALKYLENGLYKOL FUNKTIONALISIERTEN XONOTLITEN SOWIE FUNKTIONALISIERTE XONOTLITE, ZUSAMMENSETZUNGEN UND DEREN VERWENDUNG

PROCÉDÉ DE PRÉPARATION DE XONOTLITE FONCTIONNALISÉE AVEC AU MOINS UN POLYALKYLÈNE GLYCOL ET XONOTLITES FONCTIONNALISÉES, COMPOSITIONS ET UTILISATIONS ASSOCIÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.11.2022   Bulletin 2022/44**

(73) Proprietors:
- **Fundación Tecnalia Research & Innovation**
  **20009 Donostia-San Sebastian, Guipuzcoa (ES)**
- **Universidad Del Pais Vasco**
  **Euskal Herriko Unibertsitatea**
  **48940 Leioa (Vizcaya) (ES)**
- **Université de Bordeaux**
  **33000 Bordeaux (FR)**
- **L'Institut Polytechnique De Bordeaux**
  **33402 Talence Cedex (FR)**
- **LE CENTRE NATIONAL DE LA RECHERCHE SCIENTIFIQUE**
  **(CNRS)**
  **75794 Paris, Cedex 16 (FR)**

(72) Inventors:
- **Erkizia Jauregi, Edurne**
  **E-20009 GIPUZKOA (ES)**
- **Gaitero Redondo, Juan José**
  **E-20009 GIPUZKOA (ES)**
- **Aguirre Yagüe, Francisco Borja**
  **48940 LEIOA- VIZCAYA (ES)**
- **Cyril, Aymonier**
  **33608 PESSAC (FR)**

(74) Representative: **Balder IP Law, S.L.**
**Paseo de la Castellana 93**
**5ª planta**
**28046 Madrid (ES)**

(56) References cited:
**US-A1- 2011 203 486**

- **GUAN WEI ET AL: "Low hydrothermal temperature synthesis of porous calcium silicate hydrate with enhanced reactivity SiO2",** CERAMICS INTERNATIONAL, vol. 40, no. 3, 1 April 2014 (2014-04-01), pages 4415-4420, XP055851492, NL ISSN: 0272-8842, DOI: 10.1016/j.ceramint.2013.08.113 Retrieved from the Internet: URL:http://75.72.27.96/dad/Ceramics%20Inte rnational/2014%20(Vol%2040)/Volume%2040,%2 0Issue%203,%20Pages%203829-5106%20(April %2 02014)/4415_4420.pdf> [retrieved on 2021-10-14]

(52) Cooperative Patent Classification (CPC): (Cont.)

C-Sets
**C04B 28/065, C04B 7/02, C04B 7/32,
C04B 24/2647, C04B 40/0042, C04B 2103/008;
C04B 40/0039, C04B 14/043, C04B 24/2647**

**Description**

**TECHNICAL FIELD OF THE INVENTION**

The present invention relates to a process for producing functionalized xonotlite, more specifically, xonotlite functionalized with at least one polyalkylene glycol. It is also related to xonotlite functionalized with at least one polyalkylene glycol of formula (I):

$$R\text{-}O\text{-}(C_\alpha H_{2\alpha}O)_\beta\text{-}H \qquad (I)$$

wherein R is hydrogen or an aliphatic hydrocarbon group having 1 to 20 carbon atoms, a cycloaliphatic hydrocarbon group having 5 to 8 carbon atoms, or an aryl group having 6 to 14 carbon atoms; $\alpha$ is independently selected for each $-(C_\alpha H_{2\alpha}O)-$ unit from 2, 3 or 4; $\beta$ is 3 to 200; and wherein the at least one polyalkylene glycol has an average molar mass of 400 to 4000 g/mol. Also provided is a composition comprising xonotlite functionalized with at least one polyalkylene glycol of formula (I), as well as the use of said composition for accelerating the setting and hardening of cement or mixtures comprising cement.

**BACKGROUND OF THE INVENTION**

Addition of certain nanoparticles in cements favours nucleation at early stages of cement hydration since nanoparticles may effectively act as crystallization seeds, thereby contributing to the acceleration of the reaction. The small size of the nanoparticles provides large surface areas which are highly reactive, and those made of materials like calcium silicates may even act themselves as seeds. In particular, it is known that with nanoparticle addition, the pore space between the cement grains is filled faster and thus accelerates compressive strength development and the reduction of capillary porosity (see, for example, Constr. Build. Mater. 2007, 21, 539-545). By way of illustration, it is known that (nano)additions based on calcium silicates such as CSH (nano)particles and xonotlite may act as seeds and accelerate the hydration of cement improving the mechanical properties of cement-based materials (*e.g.* concrete, mortar) at early ages (< 24h), as disclosed by Stephan et al. (Cem. Con. Comp. 2015, 57, 64-67).

Xonotlite, of general formula $Ca_6Si_6O_{17}(OH)_2$, is a crystalline, calcium silicate hydrate (CSH). It was first discovered in 1866 by Rammelsberg, and natural xonotlite samples do not differ substantially from the ideal formula, with traces of Fe, Mn and Na being occasionally found. This mineral is rare in nature, so there have been significant developments towards the optimization of synthetic xonotlite production, as it has been found that many synthesis parameters have a critical effect on the final structure of the CSH, and unless they are strictly controlled, formation of phases with lower Ca/Si ratios or tobermorite $[Ca_5(Si_6O_{16})(OH)_2 \cdot 4H_2O]$ may occur, as illustrated by Henderson et al. (Chem. Geol. 2000, 167, 129-140). Xonotlite is a product of interest due to its thermoinsulating properties, or its advantageous use either as constituent in thermally cured cement-based materials, or as filler to improve flexural strength of cement matrices. Guan Wei et al. (Ceramics International 2014, Vol. 40, No. 3, pages 4415-4420) discloses the synthesis of amorphous CSH, which is a porous material.

It has been found, though, that (nano)additions based on CSH (nano)particles and xonotlite reduce the workability and flowability of the mixture and thus often more water is required, which in turn counteracts the positive effects of the (nano)addition. Usually, to reduce the quantity of water and improve the workability of the cement paste, superplasticizer compounds are used. Most superplasticizers are macromolecules based on polycarboxylate ethers (PCEs), which are comb-shaped polymers with an anionic backbone and several non-ionic pendant chains. Superplasticizers may fluidize cement even at low water-to-cement ratios. However, they are not particularly effective in improving the workability when used in combination with (nano)additions, often because they are absorbed by the (nano)additions themselves and thus lose performance.

Thus, there still exists the need for a new technical solution which may overcome the abovementioned problems, and makes it possible to incorporate said additions to cement or cementitious materials for effectively accelerating cement hydration, without impairing the workability of the material.

**SUMMARY OF THE INVENTION**

In a first aspect, it is provided a process for producing functionalized xonotlite, more particularly, xonotlite functionalized with at least one polyalkylene glycol. More specifically, it is provided a process for producing functionalized xonotlite which comprises subjecting to hydrothermal treatment, at a temperature in the range from 230 to 320 $^0$C and during a period of at least 4 hours, a mixture comprising:

- at least one calcium component which is selected from calcium hydroxide ($Ca(OH)_2$) and calcium oxide (CaO);

- at least one polyalkylene glycol of formula (I)

$$R\text{-}O\text{-}(C_\alpha H_{2\alpha}O)_\beta\text{-}H \qquad (I)$$

wherein:

R is hydrogen or an aliphatic hydrocarbon group having 1 to 20 carbon atoms, a cycloaliphatic hydrocarbon group having 5 to 8 carbon atoms, or an aryl group having 6 to 14 carbon atoms,

$\alpha$ is independently selected for each $-(C_\alpha H_{2\alpha}O)-$ unit from 2, 3 or 4,

$\beta$ is 3 to 200, and

wherein the at least one polyalkylene glycol has an average molar mass of 400 to 4000 g/mol; and

- at least one silicon-dioxide containing component which is selected from the group consisting of microsilica, nanosilica, pyrogenic silica, precipitated silica, waterglass, blast furnace slag, quartz sand and any mixture thereof;

wherein the molar ratio (C/S) of calcium from the calcium component to silicon from the silicon-dioxide containing component is from 0.9 to 1.1.

According to a second aspect, it is provided xonotlite functionalized with at least one polyalkylene glycol of formula (I):

$$R\text{-}O\text{-}(C_\alpha H_{2\alpha}O)_\beta\text{-}H \qquad (I)$$

wherein:

R is hydrogen or an aliphatic hydrocarbon group having 1 to 20 carbon atoms, a cycloaliphatic hydrocarbon group having 5 to 8 carbon atoms, or an aryl group having 6 to 14 carbon atoms;
$\alpha$ is independently selected for each $-(C_\alpha H_{2\alpha}O)-$ unit from 2, 3 or 4; and
$\beta$ is 3 to 200; and
wherein the at least one polyalkylene glycol has an average molar mass of 400 to 4000 g/mol.

In a third aspect, the invention provides a composition comprising functionalized xonotlite according to the second aspect of the invention.
According to a fourth aspect of the invention, it is provided the use of the composition as defined according to the third aspect of the invention for accelerating the setting and hardening of cement or mixtures comprising cement, also known as cementitious mixtures.

**BRIEF DESCRIPTION OF THE DRAWINGS**

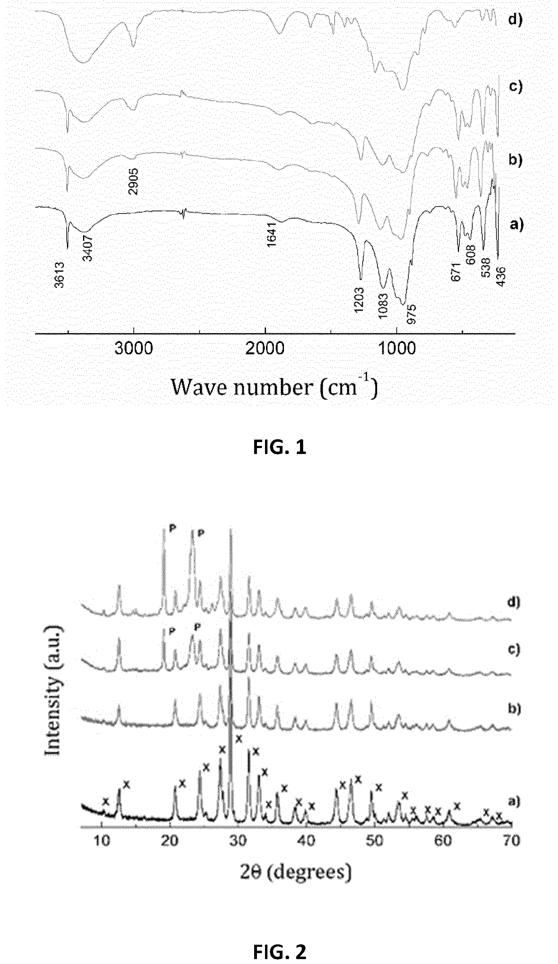

FIG. 1- Fourier-Transform Infrared (FT-IR) spectra of: non-functionalized xonotlite reference sample (spectrum a)); and exemplary PEG-functionalized xonotlites X-PEG600 (spectrum b)), X-PEG1500 (spectrum c)) and X-PEG4000 (spectrum d)) obtained according to the process of the invention (see Example 1).

FIG. 2- X-ray powder diffraction (XRPD) spectra of: non-functionalized xonotlite reference sample (spectrum a)); and exemplary PEG-functionalized xonotlites X-PEG600 (spectrum b)), X-PEG1500 (spectrum c)) and X-PEG4000 (spectrum d)) obtained according to the process of the invention (see Example 1). Symbol "X" corresponds to crystalline xonotlite peaks, and symbol "P" corresponds to characteristic peaks of PEG1500 and PEG4000.

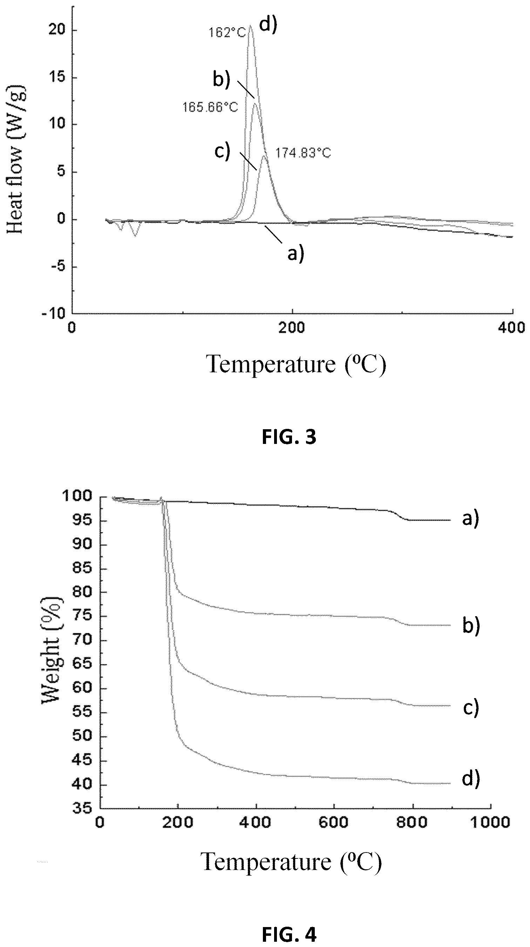

FIG. 3- DSC curve of: non-functionalized xonotlite reference sample (spectrum a)); and exemplary PEG-functionalized xonotlites X-PEG600 (spectrum b)), X-PEG1500 (spectrum c)) and X-PEG4000 (spectrum d)) obtained according to the process of the invention (see Example 1).

FIG. 4- TGA curve of: non-functionalized xonotlite reference sample (spectrum a)); and exemplary PEG-functionalized xonotlites X-PEG600 (spectrum b)), X-PEG1500 (spectrum c)) and X-PEG4000 (spectrum d)) obtained according to the process of the invention (see Example 1).

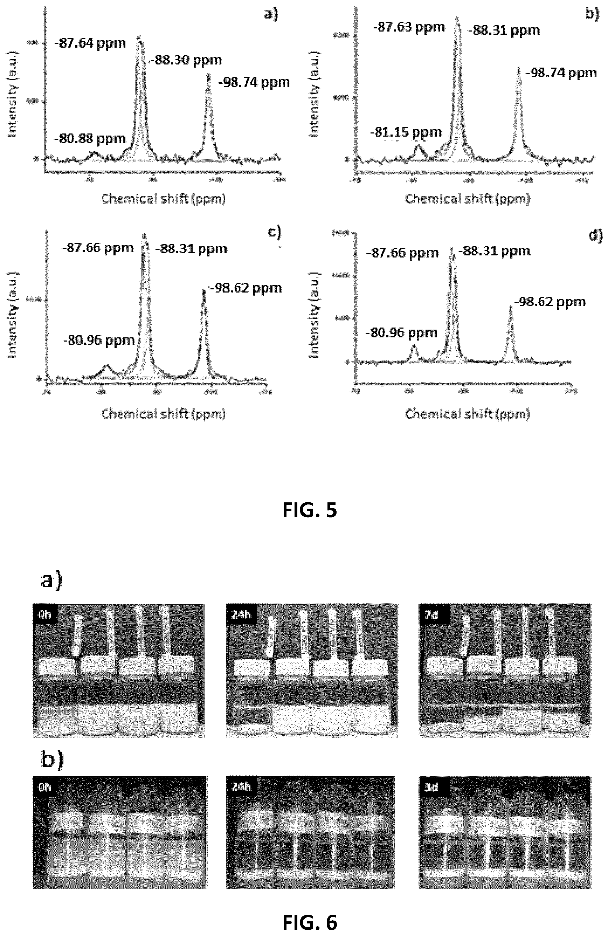

**FIG. 5** - $^{29}Si$ ss-NMR spectra of: non-functionalized xonotlite reference sample (spectrum a)); and exemplary PEG-functionalized xonotlites X-PEG600 (spectrum b)), X-PEG1500 (spectrum c)) and X-PEG4000 (spectrum d)) obtained according to the process of the invention (see Example 1).

**FIG. 6** - Dispersibility visual test results of different xonotlites in water. Top three pictures (FIG. 6 a)) show each, from left to right, images of the non-functionalized xonotlite reference sample, and of exemplary PEG-functionalized xonotlites X-PEG600, X-PEG1500 and X-PEG4000 prepared according to the process of the invention (see Example 1), right after being dispersed (t = 0h), 24 hours after being dispersed (t = 24h) and 7 days (t = 7d) after being dispersed. The bottom three pictures (FIG. 6 b)) show each, from left to right, images of the non-functionalized xonotlite reference sample, and of xonotlite combined with PEG600, PEG1500 and PEG4000 wherein each PEG has been directly added in the water, right after being dispersed (t = 0h), 24 hours after being dispersed (t = 24h) and 3 days (t = 3d) after being dispersed.

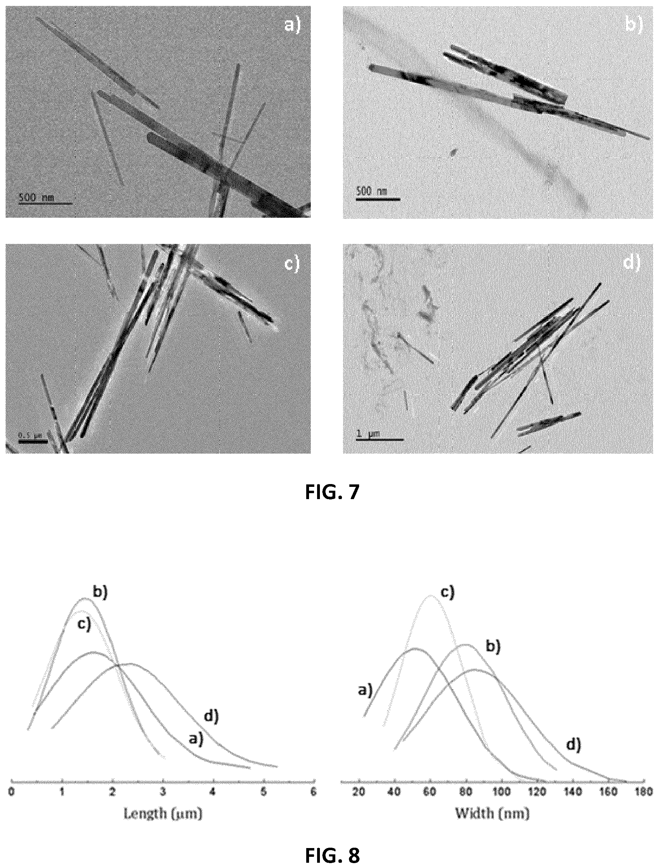

**FIG. 7 -** TEM images of: xonotlite reference sample pristine fibres (a)); and exemplary PEG-functionalized xonotlites X-PEG600 (spectrum b)), X-PEG1500 (spectrum c)) and X-PEG4000 (spectrum d)) obtained according to the process of the invention (see Example 1).

**FIG. 8 -** Normal distribution of fibres length (left image) and width (right image) of: non-functionalized xonotlite reference sample (a)); and exemplary PEG-functionalized xonotlites X-PEG600 (spectrum b)), X-PEG1500 (spectrum c)) and X-PEG4000 (spectrum d)) obtained according to the process of the invention (see Example 1).

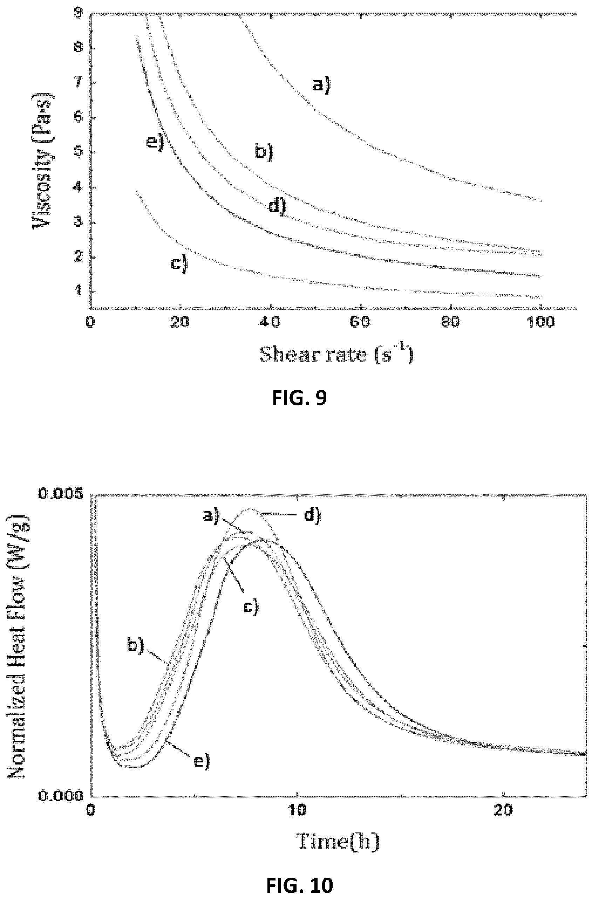

**FIG. 9** - Viscosity curves (viscosity vs shear rate) of prepared cement pastes: cement paste with non-modified xonotlite reference sample (curve a)); cement pastes with X-PEG600 (curve b)), X-PEG1500 (curve c)) and X-PEG4000 (curve d)) prepared according to Example 2; reference cement paste sample with no additive (curve e)).

**FIG. 10-** Isothermal calorimetry curves of the hydration reaction of prepared cement pastes (normalized heat flow *vs* time): cement paste with non-modified xonotlite reference sample (curve a)); cement pastes with X-PEG600 (curve b)), X-PEG1500 (curve c)), X-PEG4000 (curve d)) prepared according to Example 2; reference cement paste sample with no additive (curve e)).

## DETAILED DESCRIPTION OF THE INVENTION

According to a first aspect of the invention, it is provided a process for producing functionalized xonotlite, more particularly, xonotlite functionalized with at least one polyalkylene glycol.

In an embodiment, it is provided a process for producing functionalized xonotlite which comprises subjecting to hydrothermal treatment, at a temperature in the range from 230 to 320 $^{0}C$ and during a period of at least 4 hours, a mixture comprising:

- at least one calcium component which is selected from calcium hydroxide ($Ca(OH)_2$) and calcium oxide (CaO);
- at least one polyalkylene glycol of formula (I)

$$R\text{-}O\text{-}(C_\alpha H_{2\alpha}O)_\beta\text{-}H \qquad (I)$$

wherein:

R is hydrogen or an aliphatic hydrocarbon group having 1 to 20 carbon atoms, a cycloaliphatic hydrocarbon group having 5 to 8 carbon atoms, or an aryl group having 6 to 14 carbon atoms,
$\alpha$ is independently selected for each -$(C_\alpha H_{2\alpha}O)$- unit from 2, 3 or 4,
$\beta$ is 3 to 200, and
wherein the at least one polyalkylene glycol has an average molar mass of 400 to 4000 g/mol; and

- at least one silicon-dioxide containing component which is selected from the group consisting of microsilica, nanosilica, pyrogenic silica, precipitated silica, waterglass, blast furnace slag, quartz sand and any mixture thereof;

wherein the molar ratio (C/S) of calcium from the calcium component to silicon from the silicon-dioxide containing component is from 0.9 to 1.1.

Said process according to the first aspect of the invention successfully produces functionalized xonotlite with an optimal structure for end use applications, which is achieved by carrying out the hydrothermal treatment at a temperature in the range from 230 to 320 $^0$C during a period of at least 4 hours, wherein the pressure used is autogenous pressure which results over said period of at least 4 hours. This minimum period of time of 4 hours in that temperature range was found to ensure that recrystallization of the formed calcium silicate hydrate occurred, while shorter periods resulted in structures which were excessively amorphous. Besides, the temperature and duration of the hydrothermal treatment were found to play an essential role in the formation of the desired xonotlite structure. The hydrothermal treatment period may optionally be longer, for example, of at least 5 or 6 hours.

Preferably, the temperature used in the hydrothermal treatment of the process according to the first aspect of the invention is in the range from 230 to 300 $^0$C, in particular, being used during a period of at least 4 hours during said hydrothermal treatment. Experimental tests carried out at temperatures significantly higher than 320 °C, such as 365 $^0$C, revealed by TGA analysis that the poly(alkylene glycol) had undergone a significant degree of degradation.

On the other hand, autogenous pressure created during said hydrothermal treatment has been found to be typically in the range of 38 to 40 bar. It is formed by partial evaporation of water inside the reactor where hydrothermal treatment is carried out. In a particular embodiment, the mixture contains water in an amount sufficient for the aqueous mixture to occupy up to approximately half of the reactor volume, so that such autogenous pressure is generated, in particular, a pressure in the range of 38 to 40 bar.

Under those temperature and autogenous pressure conditions, crystallization may directly take place in the reactor without requiring overpressure conditions.

The mixture is preferably a water-based mixture, more preferably, in the form of a dispersion. The formation of said mixture is preferably carried out at room temperature. In a preferred embodiment, the mixture is a water-based mixture comprising decarbonated water, e.g. decarbonated deionized water. Decarbonated water may be prepared by several methods known in the art which include, but are not limited to, boiling water at a temperature of at least 100 $^0$C for at least 1 hour, or degassing water with nitrogen gas to eliminate dissolved carbon dioxide ($CO_2$). The use of such decarbonated water is particularly desirable to avoid the initial reaction of calcium with $CO_2$, so that the subsequent reaction between the calcium component and the silicon-dioxide containing component may be favoured. The expression "decarbonated water" is to be understood, in the context of the present invention, as referring to water preferably having a $CO_2$-content which is less than 30 ppb.

As already mentioned, the calcium component present in the mixture according to the method of the invention is selected from calcium hydroxide and calcium oxide. Preferably, said calcium hydroxide used in the process is uncarbonated calcium hydroxide; more preferably, said calcium hydroxide used in the process is uncarbonated calcium hydroxide having a carbonate ($CO_3^{2-}$) content which is less than 30 ppb. In another embodiment, the calcium component is calcium oxide. In still another embodiment, the calcium component is calcium oxide which is obtained from calcination of calcium carbonate or calcium hydroxide. In a preferred embodiment, the calcium component is calcium oxide obtained from calcination of calcium carbonate or calcium hydroxide, wherein said calcination is carried out at a temperature of at least 875 °C during a period equal to or higher than 5 hours. With these typical calcination conditions, it is possible to effectively produce decarbonated calcium oxide, wherein said decarbonated calcium oxide preferably has a carbonate ($CO_3^{2-}$) content which is less than 30 ppb. In still another preferred embodiment, said calcination may be carried out at a temperature of at least 1000 °C, or more preferably, at a temperature of at least 1100 °C. According to a preferred embodiment, the calcium component is calcium oxide, in particular obtainable from calcination of calcium carbonate of calcium hydroxide, wherein said calcination is carried out at a temperature of at least 1000 °C during a period equal to or higher than 5 hours, equal to or higher than 7 hours, equal to or higher than 8 hours, or equal to or higher than 10 hours. In another preferred embodiment, the calcium component is calcium oxide, in particular obtainable from calcination of calcium carbonate of calcium hydroxide, wherein said calcination is carried out at a temperature of at least 1100 °C during a period equal to or higher than 5 hours, equal to or higher than 7 hours, equal to or higher than 8 hours, or equal to or higher than 10 hours.

Substituent R in formula (I) is preferably hydrogen or an aliphatic hydrocarbon group having 1 to 20 carbon atoms, the latter being more preferably an aliphatic hydrocarbon group having 1 to 15 carbon atoms, much more preferably an aliphatic hydrocarbon group having 1 to 12 carbon atoms, still more preferably an aliphatic hydrocarbon group having 1 to 10 carbon atoms, and still even more preferably an aliphatic hydrocarbon group having 2 to 6 carbon atoms, or 1 to 4 carbon atoms. In a particularly preferred embodiment, R in formula (I) is hydrogen.

$\alpha$ in formula (I) may be independently selected for each $-(C_\alpha H_{2\alpha}O)-$ unit from 2 or 3, thus including polyalkylene glycol copolymers when two different monomers are used, or polyalkylene glycol homopolymers, when a single type of monomer is used. Alternatively, $\alpha$ may be homogeneously selected for all $-(C_\alpha H_{2\alpha}O)-$ units from 2, 3 or 4, thus corresponding to a polyalkylene glycol homopolymer which may be based on either ethylene, propylene or butylene. Preferably, $\alpha$ is selected for all $-(C_\alpha H_{2\alpha}O)-$ units from 2 or 3.

In formula (I), $\beta$ may preferably be in the range from 4 to 180, more preferably in the range from 4 to 150, still more preferably in the range from 5 to 120. $\beta$ in formula (I) may also be in the range from 3 to 150, in the range from 4 to 100, in the range from 4 to 75, or in the range from 4 to 60.

The polyalkylene glycol of formula (I) is preferably selected from the group consisting of poly(ethylene glycol) (PEG), polypropylene glycol) (PPG) , poly(butylene glycol) (PBG) and copolymers of ethylene oxide and propylene oxide. More preferably, the polyalkylene glycol of formula (I) has an average molar mass of 300 to 4000 g/mol, and is selected from the group consisting of poly(ethylene glycol) (PEG), polypropylene glycol) (PPG), poly(butylene glycol) (PBG) and copolymers of ethylene oxide and propylene oxide. Still more preferably, the polyalkylene glycol of formula (I) has an average molar mass of 300 to 4000 g/mol, and is selected from the group consisting of poly(ethylene glycol) (PEG), polypropylene glycol) (PPG) and poly(butylene glycol) (PBG).

The average molar mass of the polyalkylene glycol of formula (I) may preferably be in the range from 400 to 4000 g/mol, or in the range from 500 to 4000 g/mol. In particular, the polyalkylene glycol of formula (I) has an average molar mass of 400 to 4000 g/mol and is selected from the group consisting of poly(ethylene glycol) (PEG), polypropylene glycol) (PPG), poly(butylene glycol) (PBG) and copolymers of ethylene oxide and propylene oxide. More preferably, the polyalkylene glycol of formula (I) has an average molar mass of 400 to 4000 g/mol, and is selected from the group consisting of poly(ethylene glycol) (PEG), polypropylene glycol) (PPG) and poly(butylene glycol) (PBG). In another embodiment, the polyalkylene glycol of formula (I) has an average molar mass of 500 to 4000 g/mol and is selected from the group consisting of poly(ethylene glycol) (PEG), polypropylene glycol) (PPG), poly(butylene glycol) (PBG) and copolymers of ethylene oxide and propylene oxide. Preferably, the polyalkylene glycol of formula (I) has an average molar mass of 500 to 4000 g/mol, and is selected from the group consisting of poly(ethylene glycol) (PEG), polypropylene glycol) (PPG) and poly(butylene glycol) (PBG).

The molar ratio (C/S) of calcium from the calcium component to silicon from the silicon-dioxide containing component is preferably in the range of 0.9 to 1.1, which has been found to advantageously provide the desired xonotlite structure. In a preferred embodiment, said C/S molar ratio has a value of about 1, or a value of 1.

The term "about" when used in the context of the present invention preceding a number and referring to it, is to be understood as designating any value lying within the range defined by the number $\pm 5\%$, more preferably a range defined by the number $\pm 2\%$. For example, the expression "about 1" shall be construed as "within the range of 0.95 to 1.05", preferably as "within the range of 0.98 to 1.02".

According to one embodiment of this first aspect of the invention, it is provided a process for producing functionalized xonotlite which comprises subjecting to hydrothermal treatment, at a temperature in the range from 230 to 320 °C and during a period of at least 4 hours, a mixture comprising:

- at least one calcium component which is selected from calcium hydroxide $(Ca(OH)_2)$ and calcium oxide (CaO), preferably calcium oxide;
- at least one polyalkylene glycol of formula (I)

$$H\text{-}O\text{-}(C_\alpha H_{2\alpha}O)_\beta\text{-}H \qquad (I)$$

wherein:

$\alpha$ is independently selected for each $\text{-}(C_\alpha H_{2\alpha}O)\text{-}$ unit from 2, 3 or 4, more preferably, $\alpha$ is homogeneously selected for all $\text{-}(C_\alpha H_{2\alpha}O)\text{-}$ units from 2, 3 or 4,
$\beta$ is 3 to 200, and
wherein the at least one polyalkylene glycol has an average molar mass of 400 to 4000 g/mol; and

- at least one silicon-dioxide containing component which is selected from the group consisting of microsilica, nanosilica, pyrogenic silica, precipitated silica, waterglass, blast furnace slag, quartz sand and any mixture thereof;

wherein the C/S molar ratio is from 0.9 to 1.1, preferably wherein the C/S molar ratio is about 1.0 or 1.0.

Suitable silicon-dioxide containing components include microsilica, nanosilica, pyrogenic silica, precipitated silica, waterglass, blast furnace slag, quartz sand and any mixture thereof. Depending on the chosen silicon-dioxide containing component, it may be necessary to control the sodium ion $(Na^+)$ concentration, which preferably should not exceed 5.0 wt.% of the total weight of the mixture, more preferably, it should not exceed 4.0 wt.% of the total weight of the mixture, and still more preferably, it should not exceed 3.8 wt.% of the total weight of the mixture. Ensuring a low sodium ion concentration may be of particular importance since it has been found that the $Na^+$ concentration may play a significant influence on the crystalline phase composition and morphology of the calcium silicate obtained (*cf.* Liu et al. Int. J. Miner. Metall. Mater. 2013, 20(1), 88-93). In the context of the present invention, a low $Na^+$ concentration may be particularly useful to avoid the formation of undesired byproducts during the hydrothermal treatment. For example, it has been experimentally observed that an excessively high Na$^+$ concentration may result in, for example, the formation of other crystalline products with different properties and morphology, such as pectolite. Such Na$^+$ concentration control is advantageously performed when waterglass, blast furnace slag, quartz sand or any mixture thereof are employed as silicon-dioxide containing components in the mixture. On the other hand, microsilica, nanosilica, pyrogenic silica and precipitated silica are found to typically already have low Na$^+$ concentrations, thus being particularly suitable for use in the process according to the invention. In a preferred embodiment, the at least one silicon-dioxide containing component is microsilica, nanosilica or any mixture thereof. Preferably, the at least one silicon-dioxide containing component may be microsilica or nanosilica.

Nanosilica may preferably have particle sizes in the range from 2 to 150 nm, preferably in the range from 5 to 130 nm, more preferably in the range from 10 to 120 nm, or in the range from 20 to 100 nm.

Examples of suitable nanosilica include, but are not limited to, commercial products marketed by Akzo Nobel under commercial name Levasil$^®$, such 45% w/w Levasil$^®$ (*i.e.* colloidal amorphous nanosilica in water dispersion stabilized by sodium, with 45% wt. SiO$_2$ content).

Microsilica, also known as silica fume, is an amorphous polymorph of silica, which may preferably have a particle size in the range from above 150 nm to 400 nm, more preferably from above 150 nm to 300 nm, still more preferably from above 150 nm to 200 nm, but which may also have a particle size in the range from 200 nm to 400 nm, or from 250 nm to 350 nm.

In a preferred embodiment, the molar ratio (C/P) of calcium from the calcium component to polyalkylene glycol in the mixture is in the range of 1.3 to 2.5. Preferably, said C/P molar ratio is in the range from 1.4 to 2.4; more preferably, said C/P molar ratio is in the range from 1.4 to 2.3 or in the range from 1.4 to 2.1. In another preferred embodiment, said C/P molar ratio has a value of about 1.5, or a value of 1.5. In particular, C/P molar ratio values below 1.3 were experimentally found to provide excessively high amounts of polyalkylene glycol, which resulted in an undesirably high retardant effect when used for preparing cement-based materials, as confirmed with calorimetry studies. Without wishing to be bound by theory, it is postulated that when there is such an excess of polyalkylene glycol, it would negatively affect xonotlite hydrothermal synthesis, in particular, by leading to lower xonotlite yields and/or lower quality of the resulting xonotlite due to an excessively high number of defects in its structure. Besides, excessively high amounts of polyalkylene glycol, which would lead to C/P molar ratio values below 1.3, are believed to undesirably slow down cement hydration. Furthermore, interaction between the polyalkylene glycol and the xonotlite structure during the synthetic process of the invention is believed to occur through weak ionic-type interactions with calcium ions, such as Van der Waals interactions, or by means of physisorption (see for example literature reference of Hou et al. Composites Part B 2019, 162, 433-444).

The process according to the first aspect of the invention may further comprise a step, taking place before the hydrothermal treatment, of forming the mixture comprising the at least one calcium component, the at least one polyalkylene glycol of formula (I), and the at least one silicon-dioxide containing component, wherein any of them are as defined above.

Said step of forming the mixture may comprise (i) first contacting the at least one silicon-dioxide containing component with the at least one polyalkylene glycol, and then (ii) contacting the mixture resulting from (i) with the at least one calcium component. The term "contacting" as referring to either the two components, or to the mixture and the at least one component, is to be understood as putting one component in contact with the other, or putting the mixture in contact with the at least one component, respectively. Said contacting may be carried out by adding one component to the other as in sub-step (i), or by adding the mixture resulting from sub-step (ii) to the at least one calcium component. Thus, said step of forming the mixture may comprise (i) first adding the at least one silicon-dioxide containing component to the at least one polyalkylene glycol, or first adding the at least one polyalkylene glycol to the at least one silicon-dioxide containing component, and then (ii) adding the mixture resulting from (i) to the at least one calcium component, or adding the at least one calcium component to the mixture resulting from (i). It will become apparent to the skilled person that said step of forming the mixture may advantageously be carried out in the presence of water.

In another embodiment, said step of forming the mixture may comprise (i) first introducing the at least one polyalkylene glycol in water, and subsequently (ii) adding the at least one silicon-dioxide containing component and the at least one calcium component. In this embodiment, the addition of the at least one silicon-dioxide containing component may be carried out either before or after the addition of the at least calcium component, or it may even be carried out simultaneously.

Independently of the way in which the mixture of components is formed, it is of particular importance that the hydrothermal treatment is carried out right after the calcium component and the silicon-dioxide containing component are mixed (i.e. are put in contact), because they start reacting as soon as they are put in contact.

Thus, according to a particular embodiment of the invention, the process for producing functionalized xonotlite comprises subjecting to hydrothermal treatment, at a temperature in the range from 230 to 320 °C and during a period of at least 4 hours, a mixture comprising:

-   at least one calcium component which is selected from calcium hydroxide (Ca(OH)$_2$) and calcium oxide (CaO);

- at least one polyalkylene glycol of formula (I)

$$R\text{-}O\text{-}(C_\alpha H_{2\alpha}O)_\beta\text{-}H \qquad (I)$$

wherein:

R is hydrogen or an aliphatic hydrocarbon group having 1 to 20 carbon atoms, a cycloaliphatic hydrocarbon group having 5 to 8 carbon atoms, or an aryl group having 6 to 14 carbon atoms,
$\alpha$ is independently selected for each $-(C_\alpha H_{2\alpha}O)-$ unit from 2, 3 or 4,
$\beta$ is 3 to 200, and
wherein the at least one polyalkylene glycol has an average molar mass of 400 to 4000 g/mol; and

- at least one silicon-dioxide containing component which is selected from the group consisting of microsilica, nanosilica, pyrogenic silica, precipitated silica, waterglass, blast furnace slag, quartz sand and any mixture thereof;

wherein the molar ratio (C/S) of calcium from the calcium component to silicon from the silicon-dioxide containing component is from 0.9 to 1.1; and wherein the mixture is prepared by:

(i) first contacting the at least one silicon-dioxide containing component with the at least one polyalkylene glycol, and

(ii) subsequently contacting the mixture resulting from step (i) with the at least one calcium component.

According to another particular embodiment of the invention, the process for producing functionalized xonotlite comprises subjecting to hydrothermal treatment, at a temperature in the range from 230 to 320 °C and during a period of at least 4 hours, a mixture comprising:

- at least one calcium component which is selected from calcium hydroxide ($Ca(OH)_2$) and calcium oxide (CaO);
- at least one polyalkylene glycol of formula (I)

$$R\text{-}O\text{-}(C_\alpha H_{2\alpha}O)_\beta\text{-}H \qquad (I)$$

wherein:

R is hydrogen or an aliphatic hydrocarbon group having 1 to 20 carbon atoms, a cycloaliphatic hydrocarbon group having 5 to 8 carbon atoms, or an aryl group having 6 to 14 carbon atoms,
$\alpha$ is independently selected for each $-(C_\alpha H_{2\alpha}O)-$ unit from 2, 3 or 4,
$\beta$ is 3 to 200, and
wherein the at least one polyalkylene glycol has an average molar mass of 400 to 4000 g/mol; and

- at least one silicon-dioxide containing component which is selected from the group consisting of microsilica, nanosilica, pyrogenic silica, precipitated silica, waterglass, blast furnace slag, quartz sand and any mixture thereof;

wherein the molar ratio (C/S) of calcium from the calcium component to silicon from the silicon-dioxide containing component is from 0.9 to 1.1; and wherein the mixture is prepared by:

(i) first introducing the at least one polyalkylene glycol in water, and

(ii) subsequently adding the at least one silicon-dioxide containing component and the at least one calcium component to the aqueous mixture of step (i), wherein said addition is carried out either simultaneously or sequentially.

The process according to the first aspect of the invention may further comprise a cooling step, taking place after the hydrothermal treatment. In said cooling step, the resulting product may be cooled down to a temperature which is equal to or less than 90 °C, preferably, during a cooling time which is equal to or less than 1 hour, more preferably, during a cooling time which is equal to or less than 45 minutes, still more preferably, during a cooling time which is equal to or less than 45 minutes, or still even more preferably, during a cooling time which is equal to or less than 30 minutes.

According to a second aspect of the invention, it is provided xonotlite functionalized with at least one polyalkylene glycol of formula (I):

$$R\text{-}O\text{-}(C_\alpha H_{2\alpha}O)_\beta\text{-}H \qquad (I)$$

wherein:

R is hydrogen or an aliphatic hydrocarbon group having 1 to 20 carbon atoms, a cycloaliphatic hydrocarbon group having 5 to 8 carbon atoms, or an aryl group having 6 to 14 carbon atoms;

$\alpha$ is independently selected for each $-(C_\alpha H_{2\alpha}O)-$ unit from 2, 3 or 4; and

$\beta$ is 3 to 200; and

wherein the at least one polyalkylene glycol has an average molar mass of 400 to 4000 g/mol.

R in formula (I) is preferably hydrogen or an aliphatic hydrocarbon group having 1 to 20 carbon atoms, the latter being more preferably an aliphatic hydrocarbon group having 1 to 15 carbon atoms, much more preferably an aliphatic hydrocarbon group having 1 to 12 carbon atoms, still more preferably an aliphatic hydrocarbon group having 1 to 10 carbon atoms, and still even more preferably an aliphatic hydrocarbon group having 2 to 6 carbon atoms, or 1 to 4 carbon atoms. In a particularly preferred embodiment, R in formula (I) is hydrogen.

$\alpha$ in formula (I) may be independently selected for each $-(C_\alpha H_{2\alpha}O)-$ unit from 2 or 3, thus including polyalkylene glycol copolymers when two different monomers are used, or polyalkylene glycol homopolymers, when a single type of monomer is used. Alternatively, $\alpha$ may be homogeneously selected for all $-(C_\alpha H_{2\alpha}O)-$ units from 2, 3 or 4, thus corresponding to a polyalkylene glycol homopolymer which may be based on either ethylene, propylene or butylene. Preferably, $\alpha$ is selected for all $-(C_\alpha H_{2\alpha}O)-$ units from 2 or 3.

In formula (I), $\beta$ may preferably be in the range from 4 to 180, more preferably in the range from 4 to 150, still more preferably in the range from 5 to 120. $\beta$ in formula (I) may also be in the range from 3 to 150, in the range from 4 to 100, in the range from 4 to 75, or in the range from 4 to 60.

The polyalkylene glycol of formula (I) is preferably selected from the group consisting of poly(ethylene glycol) (PEG), polypropylene glycol) (PPG) , poly(butylene glycol) (PBG) and copolymers of ethylene oxide and propylene oxide. More preferably, the polyalkylene glycol of formula (I) has an average molar mass of 300 to 4000 g/mol, and is selected from the group consisting of poly(ethylene glycol) (PEG), polypropylene glycol) (PPG), poly(butylene glycol) (PBG) and copolymers of ethylene oxide and propylene oxide. Still more preferably, the polyalkylene glycol of formula (I) has an average molar mass of 300 to 4000 g/mol, and is selected from the group consisting of poly(ethylene glycol) (PEG), polypropylene glycol) (PPG) and poly(butylene glycol) (PBG).

The average molar mass of the polyalkylene glycol of formula (I) may preferably be in the range from 400 to 4000 g/mol, or in the range from 500 to 4000 g/mol. In particular, the polyalkylene glycol of formula (I) has an average molar mass of 400 to 4000 g/mol and is selected from the group consisting of poly(ethylene glycol) (PEG), polypropylene glycol) (PPG), poly(butylene glycol) (PBG) and copolymers of ethylene oxide and propylene oxide. More preferably, the polyalkylene glycol of formula (I) has an average molar mass of 400 to 4000 g/mol, and is selected from the group consisting of poly(ethylene glycol) (PEG), polypropylene glycol) (PPG) and poly(butylene glycol) (PBG). In another embodiment, the polyalkylene glycol of formula (I) has an average molar mass of 500 to 4000 g/mol and is selected from the group consisting of poly(ethylene glycol) (PEG), polypropylene glycol) (PPG), poly(butylene glycol) (PBG) and copolymers of ethylene oxide and propylene oxide. Preferably, the polyalkylene glycol of formula (I) has an average molar mass of 500 to 4000 g/mol, and is selected from the group consisting of poly(ethylene glycol) (PEG), polypropylene glycol) (PPG) and poly(butylene glycol) (PBG).

In a preferred embodiment, the molar ratio (C/P) of calcium to polyalkylene glycol in the functionalized xonotlite is in the range of 15 to 30. Preferably, said C/P molar ratio in the functionalized xonotlite is in the range from 16 to 30; more preferably, said C/P molar ratio in the functionalized xonotlite is in the range from 16 to 27 or in the range from 17 to 28.

The molar ratio (X/P) of xonotlite to polyalkylene glycol in the functionalized xonotlite may be in the range of 2.5 to 5, preferably, said molar ratio X/P may be in the range of 3 to 4.5.

The functionalized xonotlite according to this second aspect of the invention preferably has an FT-IR spectrum comprising peaks at about 975, 815, 1200, 2900 and 3600 cm$^{-1}$. In a preferred embodiment, the functionalized xonotlite has an FT-IR spectrum comprising peaks at 975, 815, 1200, 2900 and 3600 cm$^{-1}$. Preferably, the functionalized xonotlite has an FT-IR spectrum comprising peaks at about 975, 815, 1200, 2900, 3400 and 3600 cm$^{-1}$. In another embodiment, the functionalized xonotlite has an FT-IR spectrum comprising peaks at 975, 815, 1200, 2900, 3400 and 3600 cm$^{-1}$. In this second aspect of the invention, FT-IR spectra were preferably recorded by dilution of the sample in a dry solution with KBr, according to standard methods. It was found that the functionalized xonotlites of the present invention presented a characteristic band at 2900 cm$^{-1}$ (see **FIG.** 1), with an intensity that increased when polyalkylene glycol polymers of higher molecular weights were used, which was associated to the C-H stretching of the alkyl groups of the PEG molecules.

The functionalized xonotlite according to the second aspect of the invention may present an exothermic peak between about 150 and 200 °C, as determined by differential scanning calorimetry. Preferably, it presents an exothermic peak between 150 and 200 °C, as determined by differential scanning calorimetry (DSC). Said DSC exothermic peak at about 150-200 °C was correlated to the loss of mass which was also observed in thermogravimetric analysis (TGA), as illustrated in FIG. 3 and FIG. 4, respectively. It was indicative of the degradation of the organic material which usually happens around these temperatures, thus indirectly confirming the successful functionalization with polyalkylene glycol polymers of different molecular weights.

In another embodiment, according to this second aspect of the invention, it is provided functionalized xonotlite having an FT-IR spectrum comprising peaks at about 975, 815, 1200, 2900 and 3600 $cm^{-1}$, and presenting an exothermic peak between about 150 and 200 °C, as determined by differential scanning calorimetry. Preferably, according to this second aspect of the invention, it is provided functionalized xonotlite having an FT-IR spectrum comprising peaks at 975, 815, 1200, 2900 and 3600 $cm^{-1}$, and presenting an exothermic peak between 150 and 200 °C, as determined by differential scanning calorimetry. More preferably, the functionalized xonotlite has an FT-IR spectrum comprising peaks at 975, 815, 1200, 2900 and 3600 $cm^{-1}$ and presents an exothermic peak between 150 and 200 °C, as determined by differential scanning calorimetry, and is obtained or obtainable by the process of the first aspect of the invention, as further defined according to any of the embodiments above.

The functionalized xonotlites according to the present invention surprisingly showed higher stability over time, when dispersed in water, than non-modified xonotlites wherein the polyalkylene glycol had been separately added (see qualitative evaluation of dispersibility in Example 1). It has been surprisingly found that functionalized xonotlites according to the present invention had typical fibre- or needle-like structure of xonotlitle, but with a particle width which was higher than that observed in non-modified xonotlite particles (see FIG. 8).

The functionalized xonotlite according to this second aspect of the invention may preferably comprise at least one polyalkylene glycol of formula (I):

$$R\text{-}O\text{-}(C_\alpha H_{2\alpha}O)_\beta\text{-}H \qquad (I)$$

wherein:

R is hydrogen or an aliphatic hydrocarbon group having 1 to 20 carbon atoms, a cycloaliphatic hydrocarbon group having 5 to 8 carbon atoms, or an aryl group having 6 to 14 carbon atoms;

$\alpha$ is independently selected for each $-(C_\alpha H_{2\alpha}O)-$ unit from 2, 3 or 4; and

$\beta$ is 3 to 200; and

wherein the at least one polyalkylene glycol has an average molar mass of 400 to 4000 g/mol; wherein said functionalized xonotlite is obtained or obtainable according to the process of the first aspect of the invention, as further defined according to any of the embodiments above.

In a third aspect, the invention provides a composition comprising xonotlite functionalized with at least one polyalkylene glycol of formula (I), wherein said functionalized xonotlite is defined according to the second aspect of the invention, and any of the embodiments disclosed therein.

The composition according to the third aspect of the invention may comprise further ingredients or additives, such as heat stabilizers, crosslinking agents, antioxidants, flame retardants, reinforcing agents, pigments, dyes, lubricants, binders or antistatic agents.

The composition further comprises a plasticizer, more preferably, a polycarboxylate ether (PCE), such as polycarboxylate polymer Auracast® 280 from Fosroc Inc.

In an embodiment, the composition may further comprise a binder, in particular, a cementitious binder, which may be selected from the group consisting of Portland cement, white cement, calcium aluminate cement, calcium sulfoaluminate cement, and latent hydraulic or pozzolanic binder. In still another embodiment, the composition may further comprise a plasticizer, such as a polycarboxylate ether, and a binder. Preferably, the composition further comprises a plasticizer and a cementitious binder, wherein said cementitious binder is selected from the group consisting of Portland cement, white cement, calcium aluminate cement, calcium sulfoaluminate cement, and latent hydraulic or puzzolanic binder.

The composition according to this third aspect of the invention may advantageously be in powder form or dispersion form. Preference for one of these forms will mainly depend on the end use applications for which said composition is intended. Powder form was found to be particularly preferred for use in cement hydration, although dispersion form may also be used for that purpose. In the context of the present invention, the terms "dispersion" and "suspension" are meant to be equivalent and refer to a mixture of components typically including, but not limitingly, one insoluble component, wherein said mixture, if left undisturbed, would result in the particles of at least one of the components tending to settle down.

According to a fourth aspect of the invention, it is provided the use of the composition as defined according to the third aspect of the invention for accelerating the setting and hardening of cement or mixtures comprising cement, also known as cementitious mixtures.

In this regard, rheological measurements showed that the organic functionalization of xonotlite carried out in the present invention resulted in enhanced fluidification of the cement mixture (see FIG. 9), thus advantageously improving its workability. Furthermore, isothermal calorimetry results confirmed that the addition of said functionalized xonotlites of the invention to a cement paste does not negatively impact on the hydration acceleration effect. In fact, they were found to efficiently accelerate the hydration reaction, while advantageously improving the workability of the cementitious mixture.

Throughout the description and the claims, the word "comprise" and variations thereof are not intended to exclude other technical features, ingredients or steps. Additional advantages and features of the invention will become apparent to those skilled in the art upon examination of the description or may be learned by practice of the invention without undue burden.

## EXAMPLES

The following examples are provided by way of illustration and shall not be construed as limiting the invention.

## EXAMPLE 1 - EXEMPLARY SYNTHESES OF XONOTLITES FUNCTIONALIZED WITH SPECIFIC POLYALKYLENE GLYCOLS OF FORMULA (I) ACCORDING TO THE PROCESS THE INVENTION

Three different functionalized xonotlite samples were prepared with polyethylene glycol (*i.e.* $H-(OCH_2CH_2)_n-OH$) of different molecular weights ($M_W$= 600 (*i.e.* PEG600), 1500 (*i.e.* PEG1500), 4000 (*i.e.* PEG4000)), which is a particular example of polyalkylene glycol of formula (I). A reference sample consisting of crystalline pristine xonotlite, but not functionalized with polyethylene glycol, was also prepared.

All chemicals employed were obtained from commercial sources and were used without further purification. Calcium oxide was obtained from calcination of $CaCO_3$ anhydrous (>99% purity from Sigma Aldrich) for 5 hours at 1000 °C. Colloidal amorphous nano silica in water dispersion stabilized by $Na_2O$ (45%w/w Levasil® from AkzoNobel) was used as Si precursor respectively.

Polyethylene glycol of different molecular weights ($M_W$=600, 1500, 4000; purchased from Scharlab) were employed to synthesize xonotlite with PEG functionalization. Cement powder employed for preparing cement mixes was CEM I 52.5R (UNE-EN 197-1:2011) and was supplied by Cementos Lemona S.A. Water employed for xonotlite synthesis and cement pastes preparation was obtained from a Mili-Q water purification system with a resistivity equal to 18.2 MΩ·cm. Prior to its use, the water was boiled for 15 minutes to eliminate all the dissolved $CO_2$ present in the solution.

### Synthesis of non-modified xonotlite sample (hereinafter also referred to as "X-REF")

Crystalline pristine xonotlite samples (C/S molar ratio equal to 1.0) were synthesized to be used as non-modified xonotlite reference samples using the same hydrothermal conditions. In a typical synthesis, 4 g of 45% w/w Levasil® (i.e. 1.8 g or 0.03 moles of $SiO_2$) and 1.68 g of CaO (0.03 moles) were introduced in a 600-mL stainless steel vessel with 300 mL of water.

The reactor was closed and heated until 250 °C. The autogenous pressure generated was 38 bar and the system was quenched after 4 hours of reaction. All the samples were collected by filtration and washed twice with acetone and dried at 80 °C for 4 hours. The total amount of product obtained after drying was 3.48 g.

### General synthesis of xonotlite samples functionalized with polyethylene glycols of different molecular weights

Functionalized xonotlite samples were prepared as described above for the non-modified xonotlite sample, but adding polyethylene glycol polymer dissolved in the water medium at the beginning of the reaction. In all functionalized xonotlite samples, polyethylene glycol was added to the water medium with a C/P molar ratio of 1.5, and then the solution was mixed inside the reactor vessel with the other precursors.

**Synthesis of a xonotlite sample functionalized with polyethylene glycol of molecular weight 600 g/mol (hereinafter also referred to as "X-PEG600")**

12 g (0.02 moles) of PEG600 dissolved in water were mixed with $SiO_2$ and CaO precursors (C/P ratio = 1.5 moles). The reactor was closed and after 4 hours of reaction at 250 °C the reaction was quenched and the solid was filtered. Once filtered, and washed with acetone, the solid was dried at 80 °C for 4 hours, obtaining 4.28 g of solid X-PEG600.

**Synthesis of a xonotlite sample functionalized with polyethylene glycol of molecular weight 1500 g/mol (hereinafter also referred to as "X-PEG1500")**

30 g (0.02 moles) of PEG1500 dissolved in water were mixed with $SiO_2$ and CaO precursors (C/P ratio = 1.5 moles). The reactor was closed and after 4 hours of reaction at 250 °C the reaction was quenched and the solid was filtered. Once filtered, and washed with acetone, the solid was dried at 80 °C for 4 hours. In this case 5.53 g of X-PEG1500 product were obtained.

**Synthesis of a xonotlite sample functionalized with polyethylene glycol of molecular weight 4000 g/mol (hereinafter also referred to as "X-PEG4000")**

80 g (0.02 moles) of PEG4000 dissolved in water were mixed with $SiO_2$ and CaO precursors (C/P ratio = 1.5 moles). After 4 hours of reaction at 250 °C the reaction was quenched and the solid was filtered. Once filtered, and washed with acetone, the solid was dried at 80 °C for 4 hours. In this case, 9.2 g of X-PEG4000 product were obtained.

**Sample characterization**

Samples prepared as described above were characterized by FTIR, XRPD, TGA-DSC, and $^{29}$Si MAS NMR. Furthermore, their dispersion properties were also assessed by visual inspection, as explained below.

*FOURIER-TRANSFORM INFRARED SPECTROSCOPY (FT-IR)*

Conventional transmission infrared spectra of all samples were recorded at room temperature using a Perkin-Elmer Spectrum 100FTIR over the range between 400-4000 cm$^{-1}$. Samples were prepared by dilution of the sample powder in a dry solution with KBr. This technique was employed to complement XRPD analysis and better define the presence of polyethylene glycol in the reaction products.

The FT-IR spectra of all the samples (**FIG. 1**) revealed characteristic bands at 975, 815 and 1200 cm$^{-1}$, which are due to the different vibrational modes of the Si-O bond, and another one around 3600 cm$^{-1}$ which is due to the Ca-OH bond. All these absorption bands confirmed the formation of xonotlite. The broad absorption band observed at 3400 cm$^{-1}$ is known to be due to the Si-OH and H-OH stretching modes, according to Lodeiro et al. (Cement and Concrete Research 2009, 39, 147-153) and Fangying Ji et al. (Materials 2013, 6, 2846-2861).

The spectra of X-PEG600, X-PEG1500 and X-PEG4000 samples, identified as b), c) and d) in FIG. 1, respectively, further included an absorption band which was observed at 2900 cm$^{-1}$, but did not appear in the FT-IR spectrum of reference sample (X-REF), identified as a) in FIG. 1. That absorption band is typically associated to the C-H stretching of the alkyl groups of the PEG molecules, as indicated by Fangying Ji et al. (Materials, 6 (2013), 2846-2861), Branda et al. (Colloids and Surfaces A: Physicochem. Eng. Aspects 2010, 367, 12-16) and Frost et al. (Materials Research Bulletin 2012, 47, 3644-3649). Furthermore, it was found that the intensity of that band at 2900 cm$^{-1}$ increased with higher PEG molecular weights in the PEG-functionalized xonotlite. Thus, FT-IR confirmed that PEG-modified xonotlites X-PEG600, X-PEG1500 and X-PEG4000 had been synthesized.

*X-RAY POWDER DIFFRACTION (XRPD)*

XRPD analysis was carried out in a Philips X'Pert powder PW 1820 X-ray diffractometer (Phillips Panalytical) with Cu K$\alpha$ ($\lambda$=0.154 nm) X-ray source at 40 kV and 40 mA. The scan range (2$\theta$) was from 2° to 75° with 0.02° angle step and 2 seconds of acquisition time per step.

XRPD spectra of unmodified xonotlite (X-REF, reference sample), and also X-PEG600, X-PEG1500 and X-PEG4000 are provided in **FIG. 2** and identified as a), b), c) and d), respectively. Peaks corresponding to crystalline xonotlite have been marked with an "X" letter, while characteristic peaks of PEG1500 and P4000 have been marked with a "P" letter. All spectra were compared with powder diffraction files available at ICDD (The International Centre for Diffraction Data) and COD (Crystallography Open Database) to identify the phases present in the product. For Xonotlite pristine and X-PEG600 samples, every peak was fitted to well crystallized Xonotlite (PDF 00-023-0125) (see Liu et al. Advanced Material Research 2010, 105-106, 841-843; Shaw et al. Chemical Geology 2000, 167 129-140; Mostafa et al. Journal of Alloys and Compounds 2009, 467, 332-337; Zhao et al. Advances in Cement Research 2017, 29(9), 359-372; Beaudoin et al. Materials and Structures 2009, 42, 1003-1014).

In addition to the characteristic xonotlite diffraction peaks, X-PEG1500 and X-PEG4000 samples presented two new intense contributions around 19° and 23° (PDF 00-049-2095) associated to the presence of high molecular weight polyethylene glycol in the solid (cf. Li and Fang Chem. Eng. Technol. 2010, 33(10), 1650-1654). Furthermore, according to XRPD spectra, in all modified samples no significant changes in basal peak position were observed. This fact was indicative of the adsorption of the PEG molecules on the surface instead of being inside the crystal structure.

*THERMOGRAVIMETRIC ANALYSIS - DIFFERENTIAL SCANNING CALORIMETRY (TGA-DSC)*

Thermogravimetric analysis (TGA) and differential scanning calorimetry (DSC) were carried out using a METTLER TOLEDO TGA/DSC 1, composed by an HT1600 horizontal oven, an ultra-high sensitive MX5 weight scale and an HSS6 Pt-Rh DSC sensor. Samples were heated from room temperature to 900 °C with a rate of 10 °C /min under a constant air flow of 50 mL/min.

DSC and TGA curves of unmodified xonotlite (X-REF, reference sample), and also X-PEG600, X-PEG1500 and X-PEG4000 are provided in **FIG. 3** (DSC curves) and **FIG. 4** (TGA curves) and identified in each figure as a), b), c) and d), respectively.

DSC curves of X-PEG600, X-PEG1500 and X-PEG4000 all showed an exothermic peak in the range of 150-200°C, which was associated to the loss of mass observed in TGA. This indicates the degradation of the organic material which usually happens around these temperatures (cf. Zhou et al. Cement and Concrete Research 2019, 115, 20-30). Thus, these results also confirmed that xonotlite samples were successfully functionalized with the polyethylene glycol) of different molecular weights.

By analyzing the thermogravimetry curve it is possible to calculate the weight percent of lost polymer during degradation. Therefore, based on that information, the polymer content in the final solid products (i.e. PEG-functionalized xonotlite samples), as well as the polymer yield found therein, that is, the amount of PEG in the final product with respect to the amount of PEG added during the process for carrying out the hydrothermal reaction, were easily determined, and are shown in Table 1 below.

**Table 1**

| Sample | Additive | PEG amount in sample (wt. %) | Yield (%)* |
|---|---|---|---|
| Pristine xonotlite (reference sample) | N/A | - | - |
| X-PEG600 | PEG 600 | 16.0 | 5.7 |
| X-PEG1500 | PEG 1500 | 31.1 | 5.4 |
| X-PEG4000 | PEG 4000 | 64.8 | 8.4 |
| * Calculated as (g PEG in final product solid / g PEG initial amount) x 100 | | | |

As illustrated in Table 1, it was found that the higher the molecular weight of the poly(ethylene glycol) was, the higher the total amount in weight of polymer found in the final product was. Besides, according to the calculated yield values, only approx. 6% of the initial PEG remained in X-PEG600 and X-PEG1500 samples, while this amount was of about 8% in the X-PEG4000 sample.

Furthermore, in the DSC curves of X-PEG1500 and X-PEG4000, an endothermic peak in the range of 40°C and 60°C was found. It is postulated that these endotermic peaks are associated to heat absorption carried out by polyalkylene glycols PEG1500 (m.p. = 43-49°C approx.) and PEG4000 (m.p. = 53-58°C approx.) during solid to liquid conversion. The endothermic peak was not observed, though, when PEG 600 polyalkylene glycol was used because TGA analysis already starts from room temperature, around 20-22°C, and at that point it has been concerted to liquid form (PEG 600 m.p. = 20-22°C approx.).

*SOLID STATE $^{29}SI$ NUCLEAR MAGNETIC RESONANCE (SS-NMR)*

Solid-state magic-angle-spinning NMR (MAS NMR) measurements were performed on a Bruker AVANCE III spectrometer ($B_0$ = 9.4 T) equipped with a MAS/DVT probe at rotating frequency of 10 kHz and at 298 K. Samples were packed into a 4 mm $ZrO_2$ rotor. Spectra were recorded at a resonance frequency of 79.5 MHz. Pulse length was 4 $\mu$s,

and recycle time was 50 s. Chemical shifts were referenced to an external standard of TSP (*i.e.* 3-(trimethylsilyl)-2,2,3,3-tetradeuteroprionic acid sodium salt) (5 = 0 ppm). Spectra were normalized to the sample mass for quantitative comparison.

All NMR spectra were fitted with Pseudo-Voigt functions ($\eta_{Gaussian}=\eta_{Lorentzian}=0.5$) for quantitative deconvolution of overlapping peaks using Origin 7.5 Data analysis and graphing software from OriginLab Corporation.

$^{29}$Si ss-NMR spectra of non-functionalized xonotlite (X-REF, reference sample), and also of X-PEG600, X-PEG1500 and X-PEG4000 are provided in **FIG. 5**, more specifically, in a), b), c) and d), respectively.

$^{29}$Si NMR spectra of all four samples showed the two characteristic peaks of xonotlite in NMR, namely, $Q^2$ (-87 ppm) and $Q^3$ (-98 ppm) peaks, which are due to silicon atoms in $SiO_4$ moieties in bridging and branching positions in the silicate chain, respectively (*cf.* Cong et. al. Advn. Cem. Bas. Mat. 1996, 3, 133-143; Richardson Acta Cryst. 2014, B70, 903-923). There was also a small peak at -81 ppm which can be assigned to $Q^1$ (-81ppm) and it is typically found in hydrothermal synthesized xonotlite. This peak is associated to silicates at the end of the chains and they are due to imperfections in xonotlite crystal. The more perfect the crystal is, the less $Q^1$ contributions present in Xonotlite.

$Q^2$ contribution was composed by two separated peaks due to the fact that there are two different bridging silicon atoms with different bonding lengths and bonding angles inside the structure (cf. Noma et al. Chemistry Letters 1998, 27(3), 219-220). The $Q^2/Q^3$ ratio was calculated for all modified and unmodified samples. This ratio was calculated from the areas obtained in the Pseudo-Voigt deconvoluted peaks.

For pristine xonotlite (reference sample /X-REF), $Q^2/Q^3$ ratio had a value of 2.1, that is, near a value of 2.0, which corresponds to perfect xonotlite crystal. When either PEG is added to the system or the molecular weight of the PEG employed is increased, this $Q^2/Q^3$ ratio increases as well. For example, in this study $Q^2/Q^3$ ratio was found to rise from 2.1, in the case of pristine xonotlite reference sample, up to 2.4 for X-PEG600, and 3.14 for X-PEG4000. From these values, it was understood that the presence of PEG during the synthesis had an effect in the xonotlite structure.

From deconvoluted areas of $^{29}$Si NMR spectra, it is also possible to calculate the Mean Chain Length (MCL) parameter. This value is obtained from $Q^1$ population ratio by means of equation 1 below:

**Equation 1:**

$$MCL = \frac{2}{\frac{Q^1}{(Q^1+Q^2+Q^3)}}$$

Calculated MCL values, shown in Table 2 below, provided indirect information about the average length of silicate chains in calcium silicate hydrates, as referenced by Chen et al. (Cement and Concrete Research 2004, 34, 1499-1519).

**Table 2**

| Sample | MCL |
|---|---|
| Pristine xonotlite (reference sample) | 40.81 |
| X-PEG600 | 28.18 |
| X-PEG1500 | 22.72 |
| X-PEG4000 | 20.40 |

According to the obtained results, the MCL decreased when the molecular weight of the PEG employed during the reaction is increased. This also indicated that xonotlite loses crystallinity when the weight of PEG is increased in the reactor medium, thus being in agreement with previously published results in literature (Zhou et al. Cement and Concrete Research 2019, 115, 20-30; Beaudoin et al. Cement & Concrete Composites 2009, 31, 585-590).

$^{29}$Si MAS NMR characterization showed that the area of $Q^1$ signal, which is due to the silicate tetrahedra ($SiO_4$) bound only to one $SiO_4$ in the xonotlite structure, increased when the molecular weight of the PEGs also increased (from around 5% area in pristine xonotlite reference sample to around 10% area in xonotlite according to the invention functionalized with PEG4000). Furthermore, the area of $Q^3$ signal, due to the $SiO_4$ tetrahedra bound to three more $SiO_4$ tetrahedra in the xonotlite structure, decreased when the molecular weight of the PEGs increased. These results indicated that the PEG polymers and their molecular weight have an effect on the final xonotlite structure.

**Table 3**

| Q1 (%) | | | |
|---|---|---|---|
| Pristine xonotlite (reference sample) | X-PEG600 | X-PEG1500 | X-PEG4000 |

(continued)

| Q1 (%) | | | |
|---|---|---|---|
| 4.9 | 7.1 | 8.8 | 9.8 |
| Q2 (%) | | | |
| Pristine xonotlite (reference sample) | X-PEG600 | X-PEG1500 | X-PEG4000 |
| 64.4 | 63.2 | 62.4 | 68.4 |
| Q3 (%) | | | |
| Pristine xonotlite (reference sample) | X-PEG600 | X-PEG1500 | X-PEG4000 |
| 30.7 | 29.7 | 28.8 | 21.8 |

*QUALITATIVE EVALUATION OF DISPERSIBILITY*

Different suspensions were prepared using the non-modified xonotlite reference sample(X-REF), and also X-PEG600, X-PEG1500 and X-PEG4000 samples which had been prepared as described above. For each suspension, 250 mg of the corresponding xonotlite sample were mixed with 10 mL of distilled water using a 10-mL pipette, and then the vial was closed. Manual stirring was carried out for one minute. Said 250 mg corresponded, in each sample, to the specific amount of xonotlite as such, that is, when functionalized xonotlites according to the present invention were used in this study, calculations were made to ensure that 250 mg of xonotlite as such, not including the organic portion (*i.e.* PEG), were included, so that results could be consistently compared to those corresponding to the 250 mg of non-modified xonotlite reference sample.

Evolution of the dispersion was followed by visual inspection, starting from the moment when the mixing (suspension formation) took place (t = 0 h), and then after a period of 24 hours after being dispersed, and 7 days after being dispersed. Images corresponding to these three different times are provided in FIG. 6 a) (upper pictures of **FIG. 6**), wherein each image shows, from left to right, the vials corresponding X-REF (unmodified xonotlite reference sample), X-PEG600, X-PEG1500 and X-PEG4000. For comparative purposes, for each one of those vials, a comparative vial was prepared, including the same amount of xonotlite and the same amount of PEG600, PEG1500 or PEG4000, the difference being that PEG had been directly added in the water (*i.e.* it was not added according to the process of the invention wherein once it was added, a hydrothermal was carried out). These four additional samples were also subjected to visual inspection at times 0 hours, 24 hours and 3 days after being dispersed. Images corresponding to these three different times for these four additional samples are provided in **FIG. 6 b)** (lower pictures of FIG. 6), wherein each image shows, from left to right, the vials corresponding X-REF (unmodified xonotlite reference sample, X in combination with PEG600, X in combination with PEG1500 and X in combination with PEG4000, wherein the poly(ethylene glycol) has been directly added in water.

As evidenced in **FIG. 6**, dispersions of xonotlite samples functionalized with PEG according to the process of the invention were clearly more stable over time than the comparative samples shown in the lower images, wherein PEG had been added separately. In this second set of samples, complete precipitation was already observed after 24 hours.

*TRANSMISSION ELECTRON MICROSCOPY (TEM)*

Morphology and size of samples corresponding to non-functionalized xonotlite (X-REF, reference sample), and also X-PEG600, X-PEG1500 and X-PEG4000 were characterized using a JEOL JEM-1230 thermionic emission transmission electron microscope. Measurements were carried out with a voltage of 120 kV (0.14 nm limit resolution). All samples were ultrasonicated previously in a diluted water suspension (0.2 g/L) and a drop of this suspension was deposited and dried on a copper grid with a thin graphite layer treated with plasma.

Size distribution of xonotlite particles was established by measuring the length and width of 100 fibres using ImageJ program. Every measurement was carried out three times to obtain an average value to build a normal distribution curve.

**FIG. 7** includes TEM images corresponding to non-functionalized xonotlite (X-REF, reference sample; image a)), and also X-PEG600 (image b)), X-PEG1500 (image c)) and X-PEG4000 (image d)) prepared as described above. Both modified and unmodified samples were found to present needle- or fibre-like morphologies between 1 and 3 microns length and between 40 and 90 nm width. It could also be observed that no significant morphology change occurs due to the presence of PEG in xonotlite samples.

Additionally, a sum of 100 fibres has been analysed using Fiji, an ImageJ distribution program, to carry out 3 length and 3 width measurements per fibre. After the measurements, a normal distribution of the measured data was plotted (**FIG. 8**) to analyse the size effect due to the presence of PEG in the particles. According to the results obtained there is a width increase of the particles modifed with PEG (see **FIG. 8, right image**). However the effect on length (see **FIG. 8, left image**) cannot be directly correlated to the presence of PEG, since particles in X-PEG600 and X-PEG1500 seem to be shorter than those of X-REF, whereas those of X-PEG400 seemed to be longer.

**EXAMPLE 2** - **PREPARATION OF CEMENT PASTES USING THE XONOTLITE MATERIALS PREPARED IN EXAMPLE 1**

In separate experiments, each one of the non-functionalized xonotlite reference sample (X-REF) and also xonotlite-PEG samples (X-PEG600, X-PEG1500 and X-PEG4000) prepared according to the process of the invention, as particularly illustrated in Example 1, was applied to cement. Specifically, the xonotlite samples were added to cement in 1% w/w (weight of particles per weight of cement), being both in powder form, and they were premixed by means of stirring for 1 min at 300 rpm. Then, water was added in a water-to-cement weight ratio equal to 0.4, and the resulting mixture was stirred for 3 minutes at 750 rpm. Stirring was stopped for 1 minute and then it was resumed and continued for 3 minutes at 750 rpm, after which a paste was obtained.

Samples of that paste were taken to study its rheological properties, as well as to assess cement hydration by isothermal calorimetry.

*RHEOLOGICAL MEASUREMENTS*

Around 10 grams of each paste sample, prepared as described above, were employed to analyse its rheology. The data were collected using a Discovery HR1 Hybrid rheometer, and recorded by TRIOS software (both from TA Instruments). This software allows plotting viscosity versus shear rate. Shear rate employed was increased during the experiment from 0.01 $s^{-1}$ to 100 $s^{-1}$. Experiments were carried out under controlled temperature conditions at 20 °C.

Acording to the results obtained (**FIG. 9**), the presence of PEG-modified xonotlite according to the invention in the cement paste significantly lowered the viscosity and enhanced the workability of cement mixes compared to the cement paste with just xonotlite. Furthermore, viscosity observed with X-PEG samples (curves b), c) and d)) prepared according to the process of the invention was found to be close to that of the reference cement paste alone (curve e)). Furthermore, in the particular case of X-PEG1500 (curve c)), viscosity was even lower than that of the reference cement paste. Thus, it could be concluded that organic functionalization carried out according to the process of the invention significantly helps to fluidify the cement mixture and thus improve its workability.

*ISOTHERMAL CALORIMETRY MEASUREMENTS*

Heat release of the hydration process of the cement pastes was analysed by isothermal calorimetry and, more specifically, it was recorded by a TAM Air isothermal calorimeter (TA instruments). The experiment was thermostatic at 25 °C during the whole process and the heat produced during the cement hydration was followed for 48 hours. **FIG. 10** shows the results of this heat release analysis for X-REF-cement (non-modified xonotlite reference sample with cement - curve a)), X-PEG600-cement (curve b)), X-PEG1500-cement (curve c)) and X-PEG4000-cement samples (curve d)), as well as the analysis of reference cement sample (curve e)).

It was observed that by adding the non-modified xonotlite reference sample or either one of the X-PEG modified samples (X-PEG600, X-PEG1500, X-PEG4000), hydration reaction was accelerated since heat release started earlier than when cement paste alone was used. Besides, results observed when X-PEG samples were added to the cement paste were very close to those obtained with the cement paste mixed with the non-modified xonotlite reference sample. These results confirmed that the addition of the functionalized xonotlite product did not negatively affect the hydration acceleration effect. In addition to maintaining the capability of accelerating the hydration reaction, as already discussed, the modified xonotlite products of the invention advantageously improved workability of the cementitious mixture.

**EXAMPLE 3** - **PREPARATION OF CEMENT PASTES USING THE XONOTLITE MATERIALS PREPARED IN EXAMPLE 1**

Mini-slump tests were also performed to study the impact of using a modified xonotlite according to the invention in a composition further comprising a superplasticizer such as commercial polycarboxylate ether polymer Auracast® 280 (Fosroc Inc.). Auracast® 280 has been determined to contain around 28.58 wt.% superplasticizer in the mixture or dispersion.

These tests were carried out according to Lange et al. (Cement and Concrete Research 2016, 79, 131-136), which was in turn based on DIN 1164 test. Samples analysed were the reference cement paste sample with superplasticizer, the cement paste with the non-modified xonotlite reference sample and the superplasticizer, and the cement paste with the X-PEG1500 product and the superplasticizer, all of them having the same water/cement ratio of 0.3. Results are provided in Table 4 below:

**Table 4**

| Sample | Superplasticizer | Cone diameter 1 (cm) | Cone diameter 2 (cm) |
|---|---|---|---|
| Cement paste | Auracast® 280** | 12.5 | 13 |
| Cement paste + X-REF* | Auracast® 280** | 4.4 | 4.5 |
| Cement paste + X-PEG1500* | Auracast® 280** | 7.2 | 7.4 |
| * Additive (*i.e.* xonotlite particles, that is, X-REF or X-PEG1500 particles, in second and third entries above, respectively) present in an amount of 1 wt.% of the total weight of cement. <br> ** Superplasticizer present in an amount of 1.2 wt.% of the total weight of cement. | | | |

Table 4 shows that the largest diameter was obtained when only the cement paste and superplasticizer were used. When just xonotlite was added to the cement, with the same amount of superplasticizer, the diameter of the slump was reduced, because the addition of just xonotlite reduced the workability of the paste. In this case a higher amount of superplasticizer would be needed to increase the diameter of the slump. However, the diameter obtained with the modified xonotlite X-PEG1500 sample was found to be larger than the one obtained with the non-modified xonotlite reference sample (X-REF), when the same amount of plasticizer was used. This illustrates the fact that, when using a modified xonotlite according to the invention, lower amounts of superplasticizer could be used to obtain the same diameter as the one obtained when using non-modified xonotlite.

**Claims**

1.  Process for producing functionalized xonotlite, wherein the process comprises subjecting to hydrothermal treatment, at a temperature in the range from 230 to 320 °C and during a period of at least 4 hours, a mixture comprising:

    - at least one calcium component which is selected from calcium hydroxide ($Ca(OH)_2$) and calcium oxide (CaO);
    - at least one polyalkylene glycol of formula (I)

    $$R\text{-}O\text{-}(C_\alpha H_{2\alpha}O)_\beta\text{-}H \qquad (I)$$

    wherein:

    R is hydrogen or an aliphatic hydrocarbon group having 1 to 20 carbon atoms, a cycloaliphatic hydrocarbon group having 5 to 8 carbon atoms, or an aryl group having 6 to 14 carbon atoms, $\alpha$ is independently selected for each $-(C_\alpha H_{2\alpha}O)-$ unit from 2, 3 or 4, $\beta$ is 3 to 200, and wherein the at least one polyalkylene glycol has an average molar mass of 400 to 4000 g/mol; and

    - at least one silicon-dioxide containing component which is selected from the group consisting of microsilica, nanosilica, pyrogenic silica, precipitated silica, waterglass, blast furnace slag, quartz sand and any mixture thereof;

    wherein the molar ratio (C/S) of calcium from the calcium component to silicon from the silicon-dioxide containing component is from 0.9 to 1.1.

2.  The process according to claim 1, wherein the molar ratio of calcium from the calcium component to polyalkylene glycol is in the range of 1.3 to 2.5.

3.  The process according to claim 1 or 2, wherein the at least one polyalkylene glycol is selected from the group consisting of polyethylene glycol), polypropylene glycol), poly(butylene glycol) and copolymers of ethylene oxide and propylene oxide.

4. The process according to any one of claims 1-3, further comprising a step, taking place before the hydrothermal treatment, of forming the mixture comprising the at least one calcium component, the at least one polyalkylene glycol of formula (I), and the at least one silicon-dioxide containing component, wherein said step of forming the mixture comprises: (i) first contacting the at least one silicon-dioxide containing component with the at least one polyalkylene glycol, and then (ii) contacting the mixture resulting from (i) with the at least one calcium component.

5. The process according to any one of claims 1-3, further comprising a step, taking place before the hydrothermal treatment, of forming the mixture comprising the at least one calcium component, the at least one polyalkylene glycol of formula (I), and the at least one silicon-dioxide containing component, wherein said step of forming the mixture comprises: (i) first introducing the at least one polyalkylene glycol in water, and subsequently (ii) adding the at least one silicon-dioxide containing component and the at least one calcium component.

6. The process according to any one of claims 1-5, wherein the calcium component is calcium oxide which is obtained from calcination of calcium carbonate.

7. The process according to claim 6, wherein said calcination is carried out at a temperature of at least 875 °C during a period of equal to or higher than 5 hours.

8. The process according to any one of claims 1-7, wherein the silicon-dioxide containing component is microsilica, nanosilica or any mixture thereof.

9. Xonotlite functionalized with at least one polyalkylene glycol of formula (I):

$$R\text{-}O\text{-}(C_\alpha H_{2\alpha}O)_\beta\text{-}H \qquad (I)$$

wherein:

R is hydrogen or an aliphatic hydrocarbon group having 1 to 20 carbon atoms, a cycloaliphatic hydrocarbon group having 5 to 8 carbon atoms, or an aryl group having 6 to 14 carbon atoms;
$\alpha$ is independently selected for each $-(C_\alpha H_{2\alpha}O)-$ unit from 2, 3 or 4; and
$\beta$ is 3 to 200;
and wherein the at least one polyalkylene glycol has an average molar mass of 400 to 4000 g/mol.

10. Composition comprising xonotlite functionalized with at least one polyalkylene glycol of formula (I) as defined according to claim 9, which further comprises a plasticizer.

11. The composition according to claim 10, wherein the plasticizer is a polycarboxylate ether.

12. The composition according to claim 10 or 11, further comprising a cementitious binder which is selected from the group consisting of Portland cement, white cement, calcium aluminate cement, calcium sulfoaluminate cement, and latent hydraulic or pozzolanic binder.

13. The composition according to any one of claims 10- 12, which is in powder form or in dispersion form.

14. Use of the composition according to any one of claims 10- 13 for accelerating the setting and hardening of cement or mixtures comprising cement.

**Patentansprüche**

1. Verfahren zur Herstellung von funktionalisiertem Xonotlit, wobei das Verfahren eine hydrothermale Behandlung bei einer Temperatur im Bereich von 230 bis 320 °C und während eines Zeitraums von mindestens 4 Stunden umfasst, der eine Mischung unterzogen wird, die folgendes umfasst:

- mindestens eine Calciumkomponente, die aus Calciumhydroxid (Ca(OH)$_2$) und Calciumoxid (CaO) ausgewählt ist
- mindestens ein Polyalkylenglykol der Formel (I)

$$R\text{-O-}(C_\alpha H_{2\alpha}O)_\beta\text{-H} \qquad (I)$$

worin:

R Wasserstoff oder eine aliphatische Kohlenwasserstoffgruppe mit 1 bis 20 Kohlenstoffatomen, eine cycloaliphatische Kohlenwasserstoffgruppe mit 5 bis 8 Kohlenstoffatomen oder eine Arylgruppe mit 6 bis 14 Kohlenstoffatomen ist,

$\alpha$ unabhängig für jede -$(C_\alpha H_{2\alpha}O)$-Einheit aus 2, 3 oder 4 ausgewählt ist, $\beta$ 3 bis 200 ist, und wobei das mindestens eine Polyalkylenglykol eine durchschnittliche molare Masse von 400 bis 4000 g/mol aufweist; und

- mindestens eine Siliciumdioxid enthaltende Komponente, die aus der Gruppe ausgewählt ist, die aus Mikrosilika, Nanosilika, pyrogener Kieselsäure, gefällter Kieselsäure, Wasserglas, Hochofenschlacke, Quarzsand und jeder Mischung davon besteht;

wobei das molare Verhältnis (C/S) von Calcium aus der Calciumkomponente zu Silicium aus der Siliciumdioxid enthaltenden Komponente 0,9 bis 1,1 beträgt.

2. Verfahren nach Anspruch 1, wobei das molare Verhältnis von Calcium aus der Calciumkomponente zu Polyalkylenglykol im Bereich von 1,3 bis 2,5 liegt.

3. Verfahren nach Anspruch 1 oder 2, wobei das mindestens eine Polyalkylenglykol ausgewählt ist aus der Gruppe bestehend aus Poly(ethylenglykol), Poly(propylenglykol), Poly(butylenglykol) und Copolymeren von Ethylenoxid und Propylenoxid.

4. Verfahren nach einem der Ansprüche 1 bis 3, ferner umfassend einen vor der hydrothermalen Behandlung stattfindenden Schritt des Bildens der Mischung, die die mindestens eine Calciumkomponente, das mindestens eine Polyalkylenglykol der Formel (I) und die mindestens eine Siliciumdioxid enthaltende Komponente umfasst, wobei der Schritt des Bildens der Mischung umfasst: (i) zuerst das in Kontakt bringen der mindestens einen Siliciumdioxid enthaltenden Komponente mit dem mindestens einen Polyalkylenglykol und dann (ii) das in Kontakt bringen des aus (i) resultierenden Gemischs mit der mindestens einen Calciumkomponente.

5. Verfahren nach einem der Ansprüche 1 bis 3, ferner umfassend einen vor der hydrothermalen Behandlung stattfindenden Schritt des Bildens der Mischung, die die mindestens eine Calciumkomponente, das mindestens eine Polyalkylenglykol der Formel (I) und die mindestens eine Siliciumdioxid enthaltende Komponente umfasst, wobei der Schritt des Bildens der Mischung (i) zuerst das Einbringen des mindestens einen Polyalkylenglykols in Wasser und anschließend (ii) die Zugabe der mindestens einen Siliciumdioxid enthaltenden Komponente und der mindestens einen Calciumkomponente umfasst.

6. Verfahren nach einem der Ansprüche 1 bis 5, wobei die Calciumkomponente Calciumoxid ist, das durch Kalzinierung von Calciumcarbonat erhalten wird.

7. Verfahren nach Anspruch 6, wobei die Kalzinierung bei einer Temperatur von mindestens 875 °C während eines Zeitraums von 5 Stunden oder mehr durchgeführt wird.

8. Verfahren nach einem der Ansprüche 1 bis 7, wobei die Siliciumdioxid enthaltende Komponente Mikrosilika, Nanosilika oder eine Mischung davon ist.

9. Xonotlit funktionalisiert mit mindestens einem Polyalkylenglykol der Formel (I):

$$R\text{-O-}(C_\alpha H_{2\alpha}O)_\beta\text{-H} \qquad (I)$$

worin:

R Wasserstoff oder eine aliphatische Kohlenwasserstoffgruppe mit 1 bis 20 Kohlenstoffatomen, eine cycloaliphatische Kohlenwasserstoffgruppe mit 5 bis 8 Kohlenstoffatomen oder eine Arylgruppe mit 6 bis 14 Kohlenstoffatomen ist;

$\alpha$ unabhängig für jede -$(C_\alpha H_{2\alpha}O)$-Einheit aus 2, 3 oder 4 ausgewählt ist,

β 3 bis 200 ist, und

und wobei das mindestens eine Polyalkylenglykol eine durchschnittliche molare Masse von 400 bis 4000 g/mol aufweist.

**10.** Zusammensetzung, die Xonotlit enthält, das mit mindestens einem Polyalkylenglykol der Formel (I) gemäß Anspruch 9 funktionalisiert ist, und die außerdem einen Weichmacher enthält.

**11.** Zusammensetzung nach Anspruch 10, wobei der Weichmacher ein Polycarboxylatether ist.

**12.** Zusammensetzung nach Anspruch 10 oder 11, die ferner ein zementartiges Bindemittel enthält, das aus der Gruppe ausgewählt ist, die aus Portlandzement, Weißzement, Calciumaluminatzement, Calciumsulfoaluminat-Zement und latent hydraulischem oder puzzolanischem Bindemittel besteht.

**13.** Zusammensetzung nach einem der Ansprüche 10 bis 12, die in Pulverform oder in Form einer Dispersion vorliegt.

**14.** Verwendung der Zusammensetzung nach einem der Ansprüche 10-13 zur Beschleunigung des Abbindens und Erhärtens von Zement oder zementhaltigen Mischungen.

**Revendications**

**1.** Procédé de production de xonotlite fonctionnalisée, dans lequel le procédé comprend l'étape consistant à soumettre à un traitement hydrothermal, à une température comprise entre 230 et 320°°C et pendant une période d'au moins 4 heures, un mélange comprenant :

- au moins un composant calcique choisi parmi l'hydroxyde de calcium (Ca(OH)$_2$) et l'oxyde de calcium (CaO) ;
- au moins un polyalkylène glycol de formule (I)

$$R-O-(C_\alpha H_{2\alpha}O)_\beta-H \qquad (I)$$

où :

R est un hydrogène ou un groupe hydrocarbure aliphatique ayant de 1 à 20 atomes de carbone, un groupe hydrocarbure cycloaliphatique ayant de 5 à 8 atomes de carbone, ou un groupe aryle ayant de 6 à 14 atomes de carbone,
$\alpha$ est choisi indépendamment pour chaque unité -(C$_\alpha$H$_{2\alpha}$O)- parmi 2, 3 ou 4,
$\beta$ va de 3 à 200, et
où ledit au moins un polyalkylène glycol a une masse molaire moyenne allant de 400 à 4 000 g/mol ; et

- au moins un composant contenant du dioxyde de silicium qui est choisi dans le groupe constitué par la microsilice, la nano-silice, la silice pyrogénée, la silice précipitée, le verre soluble, le laitier de haut fourneau, le sable de quartz et tout mélange de ceux-ci ;

dans lequel le rapport molaire (C/S) entre le calcium du composant calcique et le silicium du composant contenant du dioxyde de silicium est compris entre 0,9 à 1,1.

**2.** Procédé selon la revendication 1, dans lequel le rapport molaire entre le calcium du composant calcique et le polyalkylène glycol est compris entre 1,3 et 2,5.

**3.** Procédé selon la revendication 1 ou 2, dans lequel le au moins un polyalkylène glycol est choisi dans le groupe constitué par le poly(éthylène glycol), le poly(propylène glycol), le poly(butylène glycol) et les copolymères d'oxyde d'éthylène et d'oxyde de propylène.

**4.** Procédé selon l'une quelconque des revendications 1 à 3, comprenant en outre une étape, ayant lieu avant le traitement hydrothermal, consistant à former le mélange comprenant ledit au moins un composant calcique, ledit au moins un polyalkylène glycol de formule (I), et ledit au moins un composant contenant du dioxyde de silicium, ladite étape de formation du mélange comprenant : (i) tout d'abord la mise en contact dudit au moins un composant contenant du dioxyde de silicium avec ledit au moins un polyalkylène glycol, puis (ii) la mise en contact du mélange résultant de (i) avec ledit au moins un composant calcique.

5. Procédé selon l'une quelconque des revendications 1 à 3, comprenant en outre une étape, ayant lieu avant le traitement hydrothermal, consistant à former le mélange comprenant ledit au moins un composant calcique, ledit au moins un polyalkylène glycol de formule (I), et ledit au moins un composant contenant du dioxyde de silicium, ladite étape de formation du mélange comprenant : (i) d'abord l'introduction dudit au moins un polyalkylène glycol dans l'eau, et ensuite (ii) l'ajout dudit au moins un composant contenant du dioxyde de silicium et dudit au moins un composant calcique.

6. Procédé selon l'une quelconque des revendications 1 à 5, dans lequel le composant calcique est de l'oxyde de calcium obtenu par calcination du carbonate de calcium.

7. Procédé selon la revendication 6, dans lequel ladite calcination est effectuée à une température d'au moins 875°°C pendant une durée supérieure ou égale à 5 heures.

8. Procédé selon l'une quelconque des revendications 1 à 7, dans lequel le composant contenant du dioxyde de silicium est de la microsilice, de la nano-silice ou l'un quelconque de leurs mélanges.

9. Xonotlite fonctionnalisée avec au moins un polyalkylène glycol de formule (I) :

$$R\text{-}O\text{-}(C_\alpha H_{2\alpha}O)_\beta\text{-}H \qquad (I)$$

où :

R est un hydrogène ou un groupe hydrocarbure aliphatique ayant de 1 à 20 atomes de carbone, un groupe hydrocarbure cycloaliphatique ayant de 5 à 8 atomes de carbone, ou un groupe aryle ayant de 6 à 14 atomes de carbone ;
$\alpha$ est choisi indépendamment pour chaque unité $\text{-}(C_\alpha H_{2\alpha}O)\text{-}$ parmi 2, 3 ou 4 ; et
$\beta$ va de 3 à 200 ;
et où ledit au moins un polyalkylène glycol a une masse molaire moyenne allant 400 à 4 000 g/mol.

10. Composition comprenant de la xonotlite fonctionnalisée par au moins un polyalkylène glycol de formule (I) tel que défini selon la revendication 9, qui comprend en outre un plastifiant.

11. Composition selon la revendication 10, dans laquelle le plastifiant est un éther de polycarboxylate.

12. Composition selon la revendication 10 ou 11, comprenant en outre un liant à base de ciment qui est choisi dans le groupe constitué par le ciment Portland, le ciment blanc, le ciment d'aluminate de calcium, le ciment sulfo-alumineux de calcium, et un liant hydraulique latent ou un liant pouzzolanique.

13. Composition selon l'une quelconque des revendications 10- 12, qui est sous forme de poudre ou sous forme de dispersion.

14. Utilisation de la composition selon l'une quelconque des revendications 10-13 pour accélérer la prise et le durcissement du ciment ou des mélanges comprenant du ciment.

**FIG. 1**

**FIG. 2**

**FIG. 3**

**FIG. 4**

EP 4 082 985 B1

**FIG. 5**

**FIG. 6**

25

FIG. 7

FIG. 8

**FIG. 9**

**FIG. 10**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Constr. Build. Mater.,* 2007, vol. 21, 539-545
- **STEPHAN et al.** *Cem. Con. Comp.,* 2015, vol. 57, 64-67
- **HENDERSON et al.** *Chem. Geol.,* 2000, vol. 167, 129-140
- **GUAN WEI et al.** *Ceramics International,* 2014, vol. 40 (3), 4415-4420
- **LIU et al.** *Int. J. Miner. Metall. Mater.,* 2013, vol. 20 (1), 88-93
- **HOU et al.** *Composites Part B,* 2019, vol. 162, 433-444
- **LODEIRO et al.** *Cement and Concrete Research,* 2009, vol. 39, 147-153
- **FANGYING JI et al.** *Materials,* 2013, vol. 6, 2846-2861
- **BRANDA et al.** *Colloids and Surfaces A: Physicochem. Eng. Aspects,* 2010, vol. 367, 12-16
- **FROST et al.** *Materials Research Bulletin,* 2012, vol. 47, 3644-3649
- **LIU et al.** *Advanced Material Research,* 2010, vol. 105-106, 841-843
- **SHAW et al.** *Chemical Geology,* 2000, vol. 167, 129-140
- **MOSTAFA et al.** *Journal of Alloys and Compounds,* 2009, vol. 467, 332-337
- **ZHAO et al.** *Advances in Cement Research,* 2017, vol. 29 (9), 359-372
- **BEAUDOIN et al.** *Materials and Structures,* 2009, vol. 42, 1003-1014
- **LI ; FANG.** *Chem. Eng. Technol.,* 2010, vol. 33 (10), 1650-1654
- **ZHOU et al.** *Cement and Concrete Research,* 2019, vol. 115, 20-30
- **CONG.** *Advn. Cem. Bas. Mat.,* 1996, vol. 3, 133-143
- **RICHARDSON.** *Acta Cryst.,* 2014, vol. B70, 903-923
- **NOMA et al.** *Chemistry Letters,* 1998, vol. 27 (3), 219-220
- **CHEN et al.** *Cement and Concrete Research,* 2004, vol. 34, 1499-1519
- **BEAUDOIN et al.** *Cement & Concrete Composites,* 2009, vol. 31, 585-590
- **LANGE et al.** *Cement and Concrete Research,* 2016, vol. 79, 131-136